# EUROPEAN PATENT SPECIFICATION

(11) **EP 2 247 033 B1**
(45) Date of publication and mention of the grant of the patent: **27.11.2013**
(21) Application number: 09725075.7
(22) Date of filing: 23.03.2009
(51) Int. Cl.: H04L 12/24

(54) **METHOD AND DEVICE FOR MANAGING A LIST**
VERFAHREN UND VORRICHTUNG ZUR VERWALTUNG EINER LISTE
PROCÉDÉ ET DISPOSITIF POUR GÉRER UNE LISTE

(30) Priority: 24.03.2008 CN 200810066189
(43) Date of publication of application: 03.11.2010
(60) Divisional application: 13186064.5
(73) Proprietor: Huawei Technologies Co., Ltd., Longgang District, Shenzhen Guangdong 518129 (CN)
(72) Inventor: JOHANSSON, Johan, 518129 Shenzhen (CN); ROBERTS, Michael, 518129 Shenzhen (CN); XIE, Boyun, 518129 Shenzhen (CN)
(74) Representative: Kreuz, Georg Maria
(86) International application number: PCT/CN2009/070946
(87) International publication number: WO 2009/117934

(56) References cited:
- CN-A- 1 642 349
- CN-A- 1 893 440
- CN-A- 1 893 441
- ZTE CORPORATION: "SAE : Selective Access of CSG Area", 3GPP DRAFT; C1-080014, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Puerto Vallarta, Mexico; 20080118, 18 January 2008 (2008-01-18), XP050027424, [retrieved on 2008-01-18]
- VODAFONE GROUP: "CSG Subscription management", 3GPP DRAFT; R2-072824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070702, 2 July 2007 (2007-07-02), XP050135601, [retrieved on 2007-07-02]
- HUAWEI: "A method of white list management", 3GPP DRAFT; C1-083297, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Budapest, Hungary; 20080811, 11 August 2008 (2008-08-11), XP050308514, [retrieved on 2008-08-11]
- HUAWEI: "Support Open Hybrid Access Mode for H(e)NB", 3GPP DRAFT; R3-090807 SUPPORT OPEN HYBRID ACCESS MODE FOR H(E)NB_REV0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090318, 18 March 2009 (2009-03-18), XP050341186, [retrieved on 2009-03-18]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 8)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.4.0, 1 March 2008 (2008-03-01), pages 1-126, XP050377579,

## Description

### TECHNICAL FIELD

The present invention relates to mobile communication, and in particular, to a method and an apparatus of list management in a communication system.

### BACKGROUND

With the development of mobile communication technologies, more and more mobile communication systems come forth, such as Global System For Mobile Communication (GSM) which is also known as the 2^{nd} Generation (2G) mobile communication system, and Wideband Code Division Multiple Access (WCDMA), Code Division Multiple Access 2000 (CDMA2000), and Time Division-Synchronous CDMA (TD-SCDMA), which are also known as the 3^{rd} Generation (3G) mobile communication system, and the systems currently under development, e.g. Long Term Evolution (LTE) and World Interoperability for Microwave Access (WiMAX). The user's requirements are more diversified with the development of the mobile communication technologies, and more attention is paid to the system devices such as base stations for the home domestic coverage, or the enterprise-class internal coverage, as well as other restricted networks. In this context, example devices and networks are as follows: home Node B, home cell, access point, private network, private cell, and the restricted networks of some specific frequency layers.

The concepts of Closed Subscriber Group (CSG) and Prioritized Subscriber Group (PSG) have been introduced for private networks. A CSG network may include one or more cells. If a subscriber subscribes to a CSG or is added by the CSG administrator into the CSG, the subscriber is normally allowed to camp on a CSG cell and apply for services. The subscriber is normally unable to camp on the CSG cell or initiate a service otherwise. That is, the CSG network or cell only provides services for the CSG members, and Non-CSG members are not allowed to use any service of the CSG network or cell except emergency calls. In the PSG network, all terminals are allowed to camp on it, but the terminals are sorted according to priority. Therefore, some terminals in the connected state may be provided with better Quality of Service (QoS) or more types of service than other terminals. The terminal in the idle state may be judged to be preferential to camp on the cell of the PSG network if it has the higher priority. That is, only the PSG member can use the preferential services provided by the PSG network or cell, and non-PSG members are allowed to roam to the PSG network or cell, but cannot use the preferential services.

Besides, Document of 3GPP DRAFT C1-080014 from ZTE discloses a flexible way to manage Allowed CSG List, where each item in the Allowed CSG List can have two modes: visible and invisible. If some CSG Area is not used in the list, the item can be made invisible without being removed or modified in the list. Document of 3GPP DRAFT R2-072824 from Vodafone Group discloses that in the case where the UE has not been updated with CSG information, the UE may need to force a Tracking Area Update on the CSG cell. This would need to be triggered by the user through the MMI of the terminal. A similar mechanism is used when a UE forces a Location Updating procedure after being informed that a Location Area is forbidden for particular UE. A 3GPP standard TS 36.300 v8.4.0 discloses that manual selection of CSG cells is supported, and this document also discloses NAS message, RRC message and DRX timer.

### SUMMARY

A method and apparatus of list management is provided according to a first aspect of the present invention which helps reduce or eliminate the problem of heavy load and cost of the core network nodes as described above.

An example list management method is provided according to a second aspect of the present invention. The example method includes: storing, by a user equipment (UE), a CSG list list (S101); and managing, by the user equipment, the CSG list according to information input manually (S102) and information sent by a network side, wherein said information input manually comprises at least one of: a command input manually to trigger a process of Location Area Update, LAU; and a command input manually to trigger a process of Tracking Area Update, TAU; wherein the managing said CSG list according to said information input manually and said information sent by said network side comprises at least one of:
when said information sent by said network side indicates said user equipment is allowed to access a CSG network/cell if the process of LAU or TAU initiated by said user equipment in the CSG network/cell is successful, and the CSG network/cell is not stored in the CSG list, adding, by said user equipment, said CSG network/cell to the CSG list; and
when said information sent by said network side indicates said user equipment is forbidden to access a CSG network/cell if the process of LAU or TAU initiated by said user equipment in the CSG network/cell is unsuccessful, and the CSG network/cell is stored in said CSG list, deleting, by said user equipment, said CSG network/cell from the CSG list.

An example user equipment is provided according to a third aspect of the present invention. The user equipment includes: a receiving unit (501), configured to receive information input by a user manually and information sent by a network side; a list storing unit (502), configured to store a CSG list and/or a PSG list; and a list managing unit (503), configured to manage content of the list storing unit according to the information received by the receiving unit (501), wherein said information input manually comprises at least one of: a command input manually to trigger a process of Location Area Update, LAU; and a command input manually to trigger a process of Tracking Area Update, TAU;
wherein said list managing unit (503) comprises a basic management subunit (5031),
wherein said basic management subunit (5031) is configured to add a CSG network/cell to said list stored in said list storing unit (502) when said information sent by said network side indicates said user equipment is allowed to access said CSG network/cell if the process of LAU or TAU initiated by said user equipment in the CSG network/cell is successful, and the CSG network/cell is not stored in said CSG list; or
wherein said basic management subunit (5031) is configured to delete a CSG network/cell from said list stored in said list storing unit (502) when said information sent by said network side indicates said user equipment is forbidden to access said CSG network/cell if the process of LAU or TAU initiated by said user equipment in the CSG network/cell is unsuccessful, and the CSG network/cell is stored in said CSG list.

According to the present invention, the CSG list and/or PSG list in the terminal are/is preferably managed manually with assistance of existing signaling of the network, and/or without requiring massive modification of the core network nodes or increasing the signaling load of the core network nodes. Thereby, the cost of network upgrade may be reduced.

### BRIEF DESCRIPTION OF THE DRAWINGS

In order to make the technical solution under the present invention or in the prior art clearer, the accompanying drawings for illustrating the embodiments of the present invention or illustrating the prior art are outlined below. Evidently, the accompanying drawings are for the exemplary purpose only.
FIG. 1 shows a list management method according to an aspect of the present invention;
FIGS. 2a-2c illustrate various processing according to a first embodiment of the present invention;
FIG 3 shows an automatic search management method of CSG lists according to a third embodiment of the present invention;
FIG 4 shows a method of maintaining and managing a CSG list in a fourth embodiment of the present invention; and
FIG. 5 shows a UE in a sixth embodiment of the present invention.

### DETAILED DESCRIPTION

The technical solution under the present invention is expounded below by reference to the accompanying drawings. Evidently, the embodiments given herein are only part of all possible embodiments of the present invention.

In an example system, such as an LTE system, a terminal may store a list of CSG networks or cells, which are accessible for the terminal. When the terminal approaches a CSG network or cell, it starts measuring the CSG network or cell, and judges whether the CSG network or cell is accessible. Alternatively, a terminal may store a list of PSG networks or cells in which the terminal can be treated as preferential user. When it approaches a PSG network or cell, the terminal starts measuring the PSG network or cell, and judges whether the terminal can be treated as a preferential user in the PSG network or cell.

The list of CSG or PSG networks or cells stored in a terminal is as a default maintained automatically. In the LTE system the management of the list can only be implemented through new messages, which are different from any existing signaling, between the terminal and the core network. Therefore, in order to support the functions of the private network according to the default, it is necessary to modify the nodes of the core network side massively, which will increase the load of the core network nodes and make the upgrade of the network or the device costly. Also, more signaling may load the air interface.

The list management method in the prior art involves modifications of the network nodes and cost of the necessary upgrade that is not suitable for legacy mature systems, such as Universal Mobile Telecommunications System (UMTS) and GSM EDGE Radio Access Network (GERAN).

In the embodiments of the present invention, the CSG list and/or the PSG list in the terminal are/is preferably managed manually with assistance of the existing signaling of the network, and/or without requiring massive modification of the core network nodes or increasing the signaling load of the core network nodes. Thereby, the cost of the network upgrade may be reduced.

In the embodiments of the present invention, the terminal stores one or more CSG lists and/or PSG lists. The CSG list is a list of CSG networks or cells accessible for the terminal, and the PSG list is a list of PSG networks or cells in which the terminal can be treated as a preferential user. The information that may be stored by the terminal includes, but is not limited to, CSG network identifier, PSG network identifier, CSG cell identifier, PSG cell identifier, location area identifier, tracking area identifier, CSG network or cell location information, PSG network or cell location information, CSG network or cell frequency information, PSG network or cell frequency information, adjacent macro cell information and other related information.

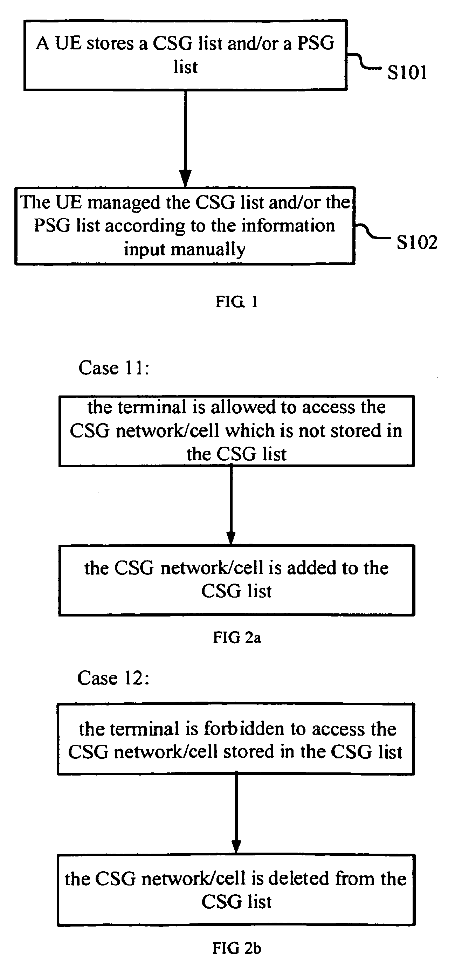

As shown in FIG 1, a CSG and/or PSG list management method is disclosed according to an aspect of the present invention. The method includes:
S101: A UE stores a CSG list and/or a PSG list.
S 102: The UE manages the CSG list and/or the PSG list according to the information input manually.

Further, in this embodiment, the UE may receive the information sent by the network side, and manage the CSG list and/or the PSG list according to the information input manually and the information sent by the network side.

In this embodiment, the CSG and/or PSG list may be managed manually without requiring massive modification of the core network nodes or increasing the signaling load of the core network nodes. The management includes: adding information to the list, deleting information from the list, and/or updating the information of the list. Therefore, the cost of network upgrade is reduced.

A CSG list management method is disclosed in a first embodiment of the present invention as illustrated in figs. 2a-2c.

In this embodiment, the CSG list is updated by the terminal, preferably manually, and it is preferred that the method is performed based on at least one of the following:
1. The CSG network or cell (or home basestation) supports manual selection, for example a string to identify a CSG cell may be delivered on a broadcast channel of the CSG cell, and the terminal is able to read the string and display it through a Man-Machine Interface (MMI);
2. A kind of message during an access control process, such as NAS message, may be sent between the terminal and the network side. Therefore, a Location Area (LA) or a Tracking Area (TA) of the CSG network or cell may be configured to be different from that of the macro cells. When the terminal searches the CSG cell or camps on the CSG cell, Location Area Update (LAU) or Tracking Area Update (TAU) is triggered. As a result, the terminal knows whether it is allowed to access the CSG cell, and updates the CSG list accordingly.

For example, the terminal may be notified, through a new Non-Access Stratum (NAS) message from the core network to the terminal, whether it is allowed or forbidden to access a CSG network or cell. Then the terminal adds the CSG network or cell to the CSG list or deletes the CSG network or cell from the CSG list accordingly.

A specific management method is as follows.

Case 11: As shown in FIG 2a, when the terminal is allowed to access the CSG network or cell, which is not stored in the CSG list, the CSG network or cell is added to the CSG list.

For example, cell A is a CSG cell and is not stored in the CSG list of the terminal. If the process of LAU or TAU initiated by the terminal in cell A is successful, the terminal confirms that it is allowed to access cell A.

If the process of LAU or TAU above is triggered manually, i.e. the user preferably uses the MMI of the terminal to manually input a command to trigger the process of LAU or TAU, the terminal stores the entry of cell A automatically in the CSG list after confirming that the terminal is allowed to access cell A.

If the process of LAU or TAU above is triggered in a non-manual mode, i.e. the user does not manually input a command to trigger the process of LAU or TAU, the terminal confirms whether it is allowed to access cell A. If yes, the terminal preferably displays the information about the accessibility through the MMI to inform the user. The user may then be prompted to store the entry of cell A in the CSG list or not, and perform the corresponding manual operations.

Case 12: As shown in FIG 2b, when the terminal is forbidden to access the CSG network or cell stored in the CSG list, the CSG network or cell is deleted from the CSG list.

For example, cell B is a CSG cell stored in the CSG list of the terminal.

If a process of LAU or TAU is initiated by the terminal in cell B through a NAS message sent to the network side, and the process is unsuccessful, e.g. the terminal receives a LAU or TAU rejection message after sending the NAS message, the terminal confirms that it is forbidden to access cell B.

If a process of Radio Resource Control (RRC) connection setup is initiated by the terminal through an RRC connection setup message sent to the network side or a reconstruction process is initiated by the terminal through a reconstruction message sent to the network side, and the process is unsuccessful, e.g. the terminal receives an RRC connection setup rejection message or has no response, the terminal confirms that it is forbidden to access cell B.

If a process of RRC connection release is initiated by the terminal through an RRC connection release message sent to the network side, and the terminal receives from the network side, a RRC connection release message carrying a release cause value indicating the terminal is forbidden to access, the terminal confirms that it is forbidden to access cell B.

If the foregoing process of LAU, TAU, connection or release is triggered by the user manually, i.e. the user uses the MMI of the terminal to manually input a command to trigger the foregoing process, the terminal deletes cell B automatically from the CSG list after confirming that the terminal is forbidden to access cell B.

If the foregoing process is triggered by the user in a non-manual mode, i.e. the user does not manually input a command to trigger the foregoing process, the terminal confirms whether it is forbidden to access cell B. If yes, the terminal displays the information about the rejection through an MMI to inform the user. The user has a choice to delete cell B from the CSG list or not, and perform the corresponding manual operations.

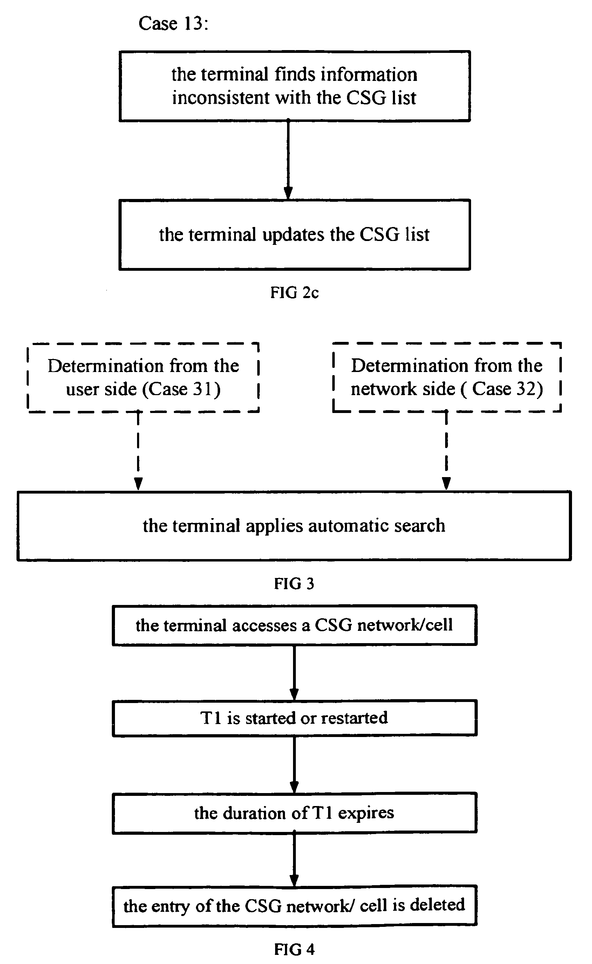

Case 13: As shown in FIG 2c, the terminal preferably updates the CSG list when it finds information inconsistent with the CSG list.

In a process of candidate search or manual search, if the terminal finds that the information about the CSG network or cell is inconsistent with the information stored in the CSG list, the terminal may verify the accuracy of the information, and choose whether to update the CSG list or not. Alternatively, the terminal may update the CSG list directly according to the newly discovered information without any verification.

Specifically, the user can decide to add or delete a CSG cell of the CSG list. For example, if the terminal is forbidden to access an example cell A', which is not stored in its CSG list, the user may still decide to store the entry of cell A' in its CSG list preferably as controlled through the MMI of the terminal. If the terminal is not allowed to access cell B' stored in its CSG list, the user may decide to delete cell B' from its CSG list and provide instructions preferably as controlled through the MMI of the terminal.

A PSG list management method is disclosed in the second embodiment of the present invention.

In this embodiment, the PSG list is updated by the terminal manually. On the one hand, the PSG network or cell supports manual selection. For example, a string to identify a CSG cell may be delivered through a broadcast channel of the PSG cell, and the terminal is able to identify the string and display it through an MMI; on the other hand, a kind of message during an access control process signaling, such as NAS message, may be sent between the terminal and the network side. Therefore, different LAs or TAs may be configured for the PSG network or cell. When the terminal searches the PSG cell or camps on the PSG cell, LAU or TAU (including periodical update) is triggered. The network side sends a NAS or RRC message carrying a preferential indication or non-preferential indication. In this way, the terminal knows whether it is a preferential user of the PSG network or cell, and updates the PSG list accordingly. The specific management method is as follows.

Case 21: When the terminal is accepted as a preferential user to access the PSG network or cell which is not stored in the PSG list, the PSG network or cell is added to the PSG list.

For example, cell C is a PSG cell and is not stored in the PSG list of the terminal. If the terminal receives a preferential access indication indicating the terminal can preferentially access cell C, the terminal confirms that it can access cell C as a preferential user.

If the user receives the indication after the user's manual trigger, e.g. the user uses the MMI of the terminal to manually input a trigger, and the terminal receives the indication afterwards, the terminal preferably stores the entry of cell C in the PSG list automatically when the terminal confirms that it can access cell C as a preferential user. If the user receives the indication without any user's manual trigger, e.g. the user does not use the MMI of the terminal to manually input a trigger, the terminal displays the information about permission of accessing cell C as a preferential user to the user through the MMI. The user has a choice to store the entry of cell C in the PSG list or not, and perform the corresponding manual operations.

Case 22: When the terminal is forbidden to access the PSG network or cell, stored in the PSG list, as a preferential user, the PSG network or cell is preferably deleted from the PSG list.

For example, cell D is a PSG cell stored in the PSG list of the terminal. When the terminal in cell D confirms that the terminal is not allowed to access or camp on the PSG cell as a preferential user, the terminal deletes the PSG from the PSG list. The indication may be carried by a LAU response or a TAU response. If the terminal initiates a process of LAU or TAU through a NAS message sent to the network side, and receives a response carrying a non-preferential access indication and/or a response carrying no preferential access indication, the terminal confirms that it is forbidden to access cell D as a preferential user. If the terminal initiates a RRC connection setup progress through an RRC connection setup message or a reconstruction process through a reconstruction message sent to the network side, and receives a response carrying a non-preferential access indication and/or a response carrying no preferential access indication, the terminal confirms that the terminal is forbidden to access cell D as a preferential user. If the terminal initiates an RRC connection release process through an RRC connection release message sent to the network side, and receives from the network side, an RRC connection release message carrying a release cause value indicating the preferential access is not allowed, the terminal confirms that the terminal is forbidden to access cell D as a preferential user.

If the foregoing process of update, connection or release is triggered by the user manually, i.e. the user uses the MMI of the terminal to manually input a command to trigger the foregoing process, the terminal deletes cell D automatically from the PSG list after confirming that the terminal is forbidden to access cell D as a preferential user.

If the foregoing process is triggered by the user in a non-manual mode, i.e. the user does not manually input a command to trigger the foregoing process, the terminal determines whether the terminal is forbidden to access cell D. If such is the case, the terminal displays the information about the rejection through the MMI to inform the user as a preferential user. The user has a choice to delete cell D from the PSG list, and perform the corresponding manual operations.

Case 23: The terminal updates the PSG list when it finds information inconsistent with the PSG list.

In a process of candidate search or manual search, if the terminal finds that the information about the PSG network or cell is inconsistent with the information stored in the PSG list, the terminal may verify the accuracy of the information, and choose to update the PSG list or not. Alternatively, the terminal may update the PSG list directly according to the newly discovered information without any verification.

Specifically, the user can decide to add or delete a PSG cell of the PSG list. For example, if the terminal is forbidden to access cell C', which is not stored in its PSG list as a preferential user" the user may still decide to store the entry of cell C' into its PSG list as a preferential user, through the MMI of the terminal. If the terminal is allowed to access cell D' stored in its PSG list, the user may decide to delete the entry of cell B' from its PSG list through the MMI of the terminal.

Besides, the categorization of users by the PSG network or cell is not limited to preferential users and non-preferential users. Preferential users of different priority levels may be set according to the actual conditions, and therefore, the preferential access indication, non-preferential access indication, and the priority level of the preferential user may be sent to the terminal in the independent messages, or in other messages.

In the first and the second embodiments of the present invention, the existing messages in the access network carry the information required for basic management such as adding information, deleting information, and updating a CSG and/or PSG list, without requiring massive modification of the core network nodes or increasing the signaling load of the core network nodes. Therefore, the cost of network upgrade may be reduced.

As shown in FIG. 3, an example automatic search management method of CSG lists is disclosed in the third embodiment of the present invention.

In this embodiment, before the cell reselection or cell access, the terminal may perform automatic search according to the information in the CSG list to confirm whether the access is allowed. Alternatively, the terminal uses other search modes, such as search according to neighboring cell list or manual search. The details of the method are as follows.

Case 31: The user side determines whether the terminal applies automatic search.

The user may determine whether the terminal applies automatic search according to the actual conditions. If the decision is not to automatically search the CSG networks or cells in one or more CSG lists, the user may manually input the corresponding indications indicating the automatic search is not available. When the terminal confirms it is allowed to access a CSG network or cell, the user can still choose not to perform automatic search for the network or cell.

Case 32: The network side determines whether the terminal applies automatic search.

The network side may determine whether the terminal applies the automatic search function according to the actual conditions, and deliver an indication indicating the terminal to apply automatic search or not on searching a CSG network or cell.

Specifically, the network side may deliver the indication through broadcast information, a NAS message, or an RRC dedicated signaling. The indication may be denoted by the content of one bit. For example, 0 indicates the automatic search is not available, 1 indicates the automatic search is available. Alternatively, the available automatic search may be indicated by sending an indication, and if there is no indication, the automatic search is not available. For example, sending of 1-bit information indicates the automatic search is available, and lack of sending the 1-bit information or the information sent being "null" indicates the automatic search is not available.

When the terminal adds or updates information in the CSG list, the terminal sets the automatic search function according to the indication delivered by the network side and its own indication. For example, if the network side allows the terminal to access a CSG cell and delivers an indication indicating the automatic search is available, but the user refuses to apply automatic search to the CSG cell, the user may store the entry of the CSG cell into the CSG list, and indicate the corresponding automatic search is disabled. In another example, the network side forbids the terminal to use a CSG cell, but when the terminal informs the user to delete the CSG cell from the CSG list, the user refuses the deletion through manual input. Therefore, the CSG list of the terminal still reserves the entry of the CSG cell, and indicates the corresponding automatic search is disabled.

It is understandable for those skilled in the art that the automatic search management method of the PSG list is similar to the automatic search management method of the CSG list described above.

In the third embodiment of the present invention, the network side gives an indication of automatic search so that the user has more accurate information from the network side. With the indication of automatic search delivered by the network side, the user controls the terminal to access the network more conveniently and directly.

As shown in FIG 4, a method of maintaining and managing a CSG list is disclosed in the fourth embodiment of the present invention.

In this embodiment, a timer (T1) is set in the terminal, and the user sets duration of T1 according to the actual conditions, for example the duration is 3 months. When the terminal accesses a CSG network or cell for the first time, T1 is started. When the terminal accesses the CSG network/cell afterwards, T1 is reset. When the duration of T1 expires, the entry of the CSG network or cell is deleted from the CSG list, and T1 is deleted. It is understandable for those skilled in the art that the device on the network side may also set a timer, which is theoretically similar to the timer set by the terminal and is not repeated here any further.

A method of maintaining and managing a PSG list is disclosed in the fifth embodiment of the present invention.

In this embodiment, a timer (T2) is set in the terminal, and the user sets duration of T2 according to the actual conditions, for example the duration is 3 months. When the terminal accesses a PSG network or cell as a preferential user for the first time, T2 is started. When the terminal accesses the PSG network or cell as a preferential user afterwards, T2 is reset. When the duration of T2 expires, the entry of the PSG network or cell is deleted from the PSG list, and T2 is deleted. It is understandable for those skilled in the art that the device on the network side may also set a timer, which is theoretically similar to the timer set by the terminal and is not repeated here any further.

In the fourth and fifth embodiments, a timer is set. A network or cell in the CSG/PSG list may remain unavailable in a long period due to the unavailable private network or home basestation for a long time, and the network or cell may be deleted in time, thus the maintenance and management of lists is facilitated.

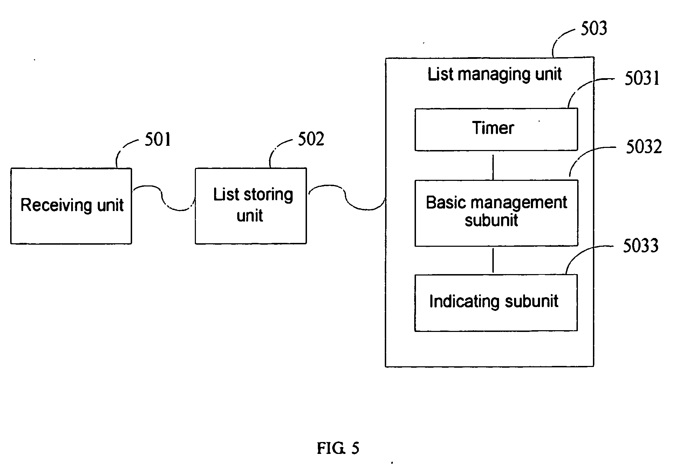

A UE is disclosed in the sixth embodiment of the present invention. As shown in FIG. 5, the UE includes a receiving unit 501, a list storing unit 502, and a list managing unit 503. The receiving unit 501 is configured to receive the information input by a user manually. Further, the receiving unit 501 may also be configured to receive the information sent by the network. The list storing unit 502 is configured to store one or more CSG lists and/or PSG lists. The list managing unit 503 is configured to manage the content of the list storing unit 502 according to the information received by the receiving unit 501.

The list managing unit 503 may further include a basic management subunit 5031, which is configured to add, delete or update information of the network or cell in the CSG list and/or the PSG list, and an indicating subunit 5032, which is configured to indicate whether to perform automatic search for the network or cell in the CSG list and/or PSG list. Further, the list managing unit 503 may include a timer 5033, which is configured to trigger the basic management subunit 5031 to delete the network or cell in the CSG list and/or the PSG list.

Although the invention has been described through some example embodiments, the invention is not limited to such embodiments.

## Claims

1. In user equipment of a wireless communication system, a method of list management comprising storing, by the user equipment, a Closed Subscriber Group, CSG, list (S101);
**characterized in that** the method of list management further comprises:
managing, by said user equipment, said CSG list according to information input manually (S102) and information sent by a network side,
wherein said information input manually comprises at least one of:
a command input manually to trigger a process of Location Area Update, LAU; and
a command input manually to trigger a process of Tracking Area Update, TAU;
wherein the managing said CSG list according to said information input manually and said information sent by said network side comprises at least one of:
when said information sent by said network side indicates said user equipment is allowed to access a CSG network/cell if the process of LAU or TAU initiated by said user equipment in the CSG network/cell is successful, and the CSG network/cell is not stored in the CSG list, adding, by said user equipment, said CSG network/cell to the CSG list; and
when said information sent by said network side indicates said user equipment is forbidden to access a CSG network/cell if the process of LAU or TAU initiated by said user equipment in the CSG network/cell is unsuccessful, and the CSG network/cell is stored in said CSG list, deleting, by said user equipment, said CSG network/cell from the CSG list.

2. The method of claim 1, wherein said information sent by said network side comprises:
Non-Access Stratum, NAS, message.

3. The method of claim 1, wherein said information input manually comprises manual setting of a duration of a timer; and wherein the method further comprises:
(re-)starting said timer when said user equipment accesses a CSG network/cell, and deleting said CSG network/cell from said CSG list when said timer expires.

4. The method of one of claims 1-3, wherein information stored in said CSG list comprises at least one of:
CSG network identifier;
CSG cell identifier;
Location Area identifier;
Tracking Area identifier;
location information of CSG network/cell;
frequency information of CSG network/cell; and
information of neighbor macro cell.

5. A user equipment, comprising a receiving unit (501), configured to receive information input by a user manually and information sent by a network side, and a list storing unit (502), configured to store a Closed Subscriber Group, CSG, list;
**characterized in that** the user equipment further comprises: a list managing unit (503), configured to manage content of said list storing unit according to said information received by said receiving unit (501),
wherein said information input manually comprises at least one of:
a command input manually to trigger a process of Location Area Update, LAU; and
a command input manually to trigger a process of Tracking Area Update, TAU;
wherein said list managing unit (503) comprises a basic management subunit (5031),
wherein said basic management subunit (5031) is configured to add a CSG network/cell to said list stored in said list storing unit (502) when said information sent by said network side indicates said user equipment is allowed to access said CSG network/cell if the process of LAU or TAU initiated by said user equipment in the CSG network/cell is successful, and the CSG network/cell is not stored in said CSG list; or
wherein said basic management subunit (5031) is configured to delete a CSG network/cell from said list stored in said list storing unit (502) when said information sent by said network side indicates said user equipment is forbidden to access said CSG network/cell if the process of LAU or TAU initiated by said user equipment in the CSG network/cell is unsuccessful, and the CSG network/cell is stored in said CSG list.

6. The user equipment of claim 5, wherein said list managing unit comprises:
a timer (5033), configured to trigger said basic management subunit to delete a network/cell.

## Patentansprüche

1. Verfahren für das Listenmanagement in einem Anwendergerät eines drahtlosen Kommunikationssystems, das das Speichern (S101) einer Liste einer geschlossenen Teilnehmergruppe, CSG-Liste, durch das Anwendergerät umfasst,
**dadurch gekennzeichnet, dass** das Verfahren für das Listenmanagement ferner Folgendes umfasst:
Managen der CSG-Liste durch das Anwendergerät in Übereinstimmung mit manuell eingegebenen Informationen (S 102) und durch eine Netzseite gesendeten Informationen,
wobei die manuell eingegebenen Informationen wenigstens einen der Folgenden umfassen:
einen manuell eingegebenen Befehl, um einen Prozess der Aufenthaltsbereichsaktualisierung, LAU, auszulösen; und
einen manuell eingegebenen Befehl, um einen Prozess der Verfolgungsbereichsaktualisierung, TAU, auszulösen;
wobei das Managen der CSG-Liste in Übereinstimmung mit den manuell eingegebenen Informationen und den durch die Netzseite gesendeten Informationen wenigstens eines des Folgenden umfasst:
wenn die durch die Netzseite gesendeten Informationen angeben, dass es dem Anwendergerät erlaubt ist, auf ein CSG-Netz/eine CSG-Zelle zuzugreifen, falls der durch das Anwendergerät in dem CSG-Netz/der CSG-Zelle initiierte Prozess der LAU oder der TAU erfolgreich ist, und das CSG-Netz/die CSG-Zelle nicht in der CSG-Liste gespeichert ist, Hinzufügen des CSG-Netzes/der CSG-Zelle zu der CSG-Liste durch das Anwendergerät; und
wenn die durch die Netzseite gesendeten Informationen angeben, dass es dem Anwendergerät verboten ist, auf ein CSG-Netz/eine CSG-Zelle zuzugreifen, falls ein durch das Anwendergerät in dem CSG-Netz/der CSG-Zelle initiierter Prozess der LAU oder der TAU erfolglos ist, und das CSG-Netz/die CSG-Zelle in der CSG-Liste gespeichert ist, Löschen des CSG-Netzes/der CSG-Zelle aus der CSG-Liste durch das Anwendergerät.

2. Verfahren nach Anspruch 1, wobei die durch die Netzseite gesendeten Informationen Folgendes umfassen:
eine Nichtzugriffsschicht-Nachricht, NAS-Nachricht.

3. Verfahren nach Anspruch 1, wobei die manuell eingegebenen Informationen eine manuelle Einstellung einer Dauer eines Zeitgebers umfassen, und wobei das Verfahren ferner Folgendes umfasst:
(Neu-)Starten des Zeitgebers, wenn das Anwendergerät auf ein CSG-Netz/eine CSG-Zelle zugreift, und Löschen des CSG-Netzes/der CSG-Zelle aus der CSG-Liste, wenn der Zeitgeber abläuft.

4. Verfahren nach einem der Ansprüche 1-3, wobei die in der CSG-Liste speicherten Informationen wenigstens eines der Folgenden umfassen:
einen CSG-Netzidentifizierer;
einen CSG-Zellenidentifizierer;
einen Aufenthaltsbereichsidentifizierer;
einen Verfolgungsbereichsidentifizierer;
Ortsinformationen des CSG-Netzes/der CSG-Zelle;
Frequenzinformationen des CSG-Netzes/der CSG-Zelle; und
Informationen über die Nachbarmakrozelle.

5. Anwendergerät, das eine Empfangseinheit (501), die konfiguriert ist, durch einen Anwender manuell eingegebene Informationen und durch eine Netzseite gesendete Informationen zu empfangen, und eine Listenspeichereinheit (502), die konfiguriert ist, eine Liste einer geschlossenen Teilnehmergruppe, CSG-Liste, zu speichern, umfasst;
**dadurch gekennzeichnet, dass** das Anwendergerät ferner Folgendes umfasst: eine Listenmanagementeinheit (503), die konfiguriert ist, den Inhalt der Listenspeichereinheit in Übereinstimmung mit den durch die Empfangseinheit (501) empfangenen Informationen zu managen,
wobei die manuell eingegebenen Informationen wenigstens einen der Folgenden umfassen:
einen manuell eingegebenen Befehl, um einen Prozess der Aufenthaltsbereichsaktualisierung, LAU, auszulösen; und
einen manuell eingegebenen Befehl, um einen Prozess der Verfolgungsbereichsaktualisierung, TAU, auszulösen;
wobei die Listenmanagementeinheit (503) eine Basismanagementuntereinheit (5031) umfasst,
wobei die Basismanagementuntereinheit (5031) konfiguriert ist, ein CSG-Netz/eine CSG-Zelle zu der in der Listenspeichereinheit (502) gespeicherten Liste hinzuzufügen, wenn die durch die Netzseite gesendeten Informationen angeben, dass es dem Anwendergerät erlaubt ist, auf das CSG-Netz/die CSG-Zelle zuzugreifen, falls der durch das Anwendergerät in dem CSG-Netz/der CSG-Zelle initiierte Prozess der LAU oder der TAU erfolgreich ist, und das CSG-Netz/die CSG-Zelle nicht in der CSG-Liste gespeichert ist; oder
wobei die Basismanagementuntereinheit (5031) konfiguriert ist, ein CSG-Netz/eine CSG-Zelle aus der in der Listenspeichereinheit (502) gespeicherten Liste zu löschen, wenn die durch die Netzseite gesendeten Informationen angeben, dass es dem Anwendergerät verboten ist, auf das CSG-Netz/die CSG-Zelle zuzugreifen, falls der durch das Anwendergerät in dem CSG-Netz/der CSG-Zelle initiierte Prozess der LAU oder der TAU erfolglos ist, und das CSG-Netz/die CSG-Zelle in der CSG-Liste gespeichert ist.

6. Anwendergerät nach Anspruch 5, wobei die Listenmanagementeinheit ferner Folgendes umfasst:
einen Zeitgeber (5033), der konfiguriert ist, die Basismanagementuntereinheit auszulösen, ein Netz/eine Zelle zu löschen.

## Revendications

1. Dans un équipement utilisateur d'un système de communication sans fil, procédé de gestion de liste comprenant le stockage, par l'équipement utilisateur, d'une liste de Groupes d'Abonnés Fermés, CSG (Closed Subscriber Group) (S101) ;
**caractérisé en ce que** le procédé de gestion de liste comprend en outre :
la gestion, par ledit équipement utilisateur, de ladite liste CSG conformément à des informations saisies manuellement (S102) et à des informations envoyées par un côté réseau,
lesdites informations saisies manuellement comprenant au moins l'une :
d'une commande saisie manuellement pour déclencher un processus de Mise à jour de Zone de Localisation, LAU (Location Area Update) ; et
d'une commande saisie manuellement pour déclencher un processus de Mise à jour de Zone de Poursuite, TAU (Tracking Area Update) ;
la gestion de ladite liste CSG conformément auxdites informations saisies manuellement et auxdites informations envoyées par ledit côté réseau comprenant au moins l'un des éléments suivants :
lorsque lesdites informations envoyées par ledit côté réseau indiquent que ledit équipement utilisateur a l'autorisation d'accéder à un réseau/une cellule CSG si le processus de mise à jour LAU ou TAU déclenché par ledit équipement utilisateur dans le réseau/la cellule CSG réussit, et si le réseau/la cellule CSG n'est pas stocké(e) dans la liste CSG, l'ajout, par ledit équipement utilisateur, dudit réseau/de ladite cellule CSG à la liste CSG ; et
lorsque lesdites informations envoyées par ledit côté réseau indiquent que ledit équipement utilisateur n'a pas l'autorisation d'accéder à un réseau/à une cellule CSG si un processus de mise à jour LAU ou TAU déclenché par ledit équipement utilisateur dans le réseau/la cellule CSG échoue, et si le réseau/la cellule CSG est stocké(e) dans ladite liste CSG, l'effacement, par ledit équipement utilisateur, dudit réseau/de ladite cellule CSG de la liste CSG.

2. Procédé selon la revendication 1, dans lequel lesdites informations envoyées par ledit côté réseau comprennent :
un message de Strate de Non-Accès, NAS (Non-Access Stratum).

3. Procédé selon la revendication 1, dans lequel lesdites informations saisies manuellement comprennent un réglage manuel de la durée d'une temporisation ; et dans lequel le procédé comprend en outre :
le (re)déclenchement de ladite temporisation lorsque ledit équipement utilisateur accède à un réseau/une cellule CSG, et l'effacement dudit réseau/de ladite cellule CSG de ladite liste CSG lorsque ladite temporisation expire.

4. Procédé selon l'une des revendications 1-3, dans lequel les informations stockées dans ladite liste CSG comprennent au moins l'un :
d'un identifiant de réseau CSG ;
d'un identifiant de cellule CSG ;
d'un identifiant de Zone de Localisation ;
d'un identifiant de Zone de Poursuite ;
d'informations de localisation de réseau/cellule CSG ;
d'informations de fréquence du réseau/de la cellule CSG ; et
d'informations concernant une macrocellule voisine.

5. Équipement utilisateur, comprenant une unité de réception (501), configurée pour recevoir des informations saisies manuellement par un utilisateur et des informations envoyées par un côté réseau, et une unité de stockage de liste (502) configurée pour stocker une liste de Groupes d'Abonnés Fermés, CSG ;
**caractérisé en ce que** l'équipement utilisateur comprend en outre : une unité de gestion de liste (503), configurée pour gérer un contenu de ladite unité de stockage de liste conformément auxdites informations reçues par ladite unité de réception (501), lesdites informations saisies manuellement comprenant au moins l'une :
d'une commande saisie manuellement pour déclencher un processus de Mise à jour de Zone de Localisation, LAU ; et
d'une commande saisie manuellement pour déclencher un processus de Mise à jour de Zone de Poursuite, TAU ;
ladite unité de gestion de liste (503) comprenant une sous-unité de gestion de base (5031),
ladite sous-unité de gestion de base (5031) étant configurée pour ajouter un réseau/une cellule CSG à ladite liste stockée dans ladite unité de stockage de liste (502) lorsque lesdites informations envoyées par ledit côté réseau indiquent que ledit équipement utilisateur a l'autorisation d'accéder audit réseau/à ladite cellule CSG si le processus de mise à jour LAU ou TAU déclenché par ledit équipement utilisateur dans le réseau/la cellule CSG réussit, et si le réseau/la cellule CSG n'est pas stocké(e) dans ladite liste CSG ; ou
ladite sous-unité de gestion de base (5031) étant configurée pour effacer un réseau/une cellule CSG de ladite liste stockée dans ladite unité de stockage de liste (502) lorsque lesdites informations envoyées par ledit côté réseau indiquent que ledit équipement utilisateur n'a pas l'autorisation d'accéder audit réseau/à ladite cellule CSG si le processus de mise à jour LAU ou TAU déclenché par ledit équipement utilisateur dans le réseau/la cellule CSG échoue, et si le réseau/la cellule CSG est stocké(e) dans ladite liste CSG.

6. Équipement utilisateur selon la revendication 5, dans lequel ladite unité de gestion de liste comprend :
une temporisation (5033), configurée pour déclencher l'effacement par ladite sous-unité de gestion de base d'un réseau/d'une cellule.
